# EUROPEAN PATENT APPLICATION

(11) **EP 1 538 615 A2**
(43) Date of publication of application: **08.06.2005**
(21) Application number: 04028229.5
(22) Date of filing: 29.11.2004
(51) Int. Cl.: G11B 7/14, G11B 19/02

(54) **Optical disc apparatus with multiple reproduction/record units for parallel operation**

(30) Priority: 01.12.2003 JP 2003401998
(71) Applicant: YAMAHA CORPORATION, Hamamatsu-shi Shizuoka-ken (JP)
(72) Inventor: Murata, Morihiro, Hamamatsu-shi Shizuoka-ken, 430-8650 (JP)
(74) Representative: Emde, Eric C.

(57) **Abstract**

A disk drive device is constructed for driving an optical disk while communicating with a host apparatus. The device is assembled by a rotation drive section that rotatively driving one optical disk, a plurality of reproduction/record units that can write or read information on the optical disk in parallel with one another, a control section that controls the rotation drive section and controls the plurality of the reproduction/record units concurrently and independently with one another, and an input/output port that connects the plurality of the reproduction/record units to the host apparatus. Each reproduction/record unit has an optical pickup for irradiating an optical beam to write or read the information on the optical disk, an analog front-end circuit for treating the information as a form of an analog signal to be inputted to the optical pickup or outputted from the optical pickup, a digital processing section connected to the analog front-end circuit for processing the information as a form of digital data, and a host interface for controlling the communication between the digital processing section and the host apparatus through the input/output port.

## Description

### BACKGROUND OF THE INVENTION

### [Technical Field]

The present invention relates to an optical disk apparatus which enables high- speed writing or reading of data for an optical disk.

### [Related Art]

A conventional optical disk apparatus is configured to use one optical head (one reproduction/record unit) per disk for reproduction/record operations of information on the optical disk. Recently, the speed of the reproduction/record operation is significantly raised several from several ten times as high as the standard speed of the reproduction/record operation. However, use of only one optical head limits reproduction/record speeds and requires a long time for reproduction/record processes on a large-capacity optical disk such as DVD.

In recent years, there are proposed optical disk apparatuses having a plurality of optical heads as disclosed in e.g., patent documents 1 and 2.

According to the apparatus in patent document 1, two process systems are configured for reproduction based on a jump-seek operation in units of specified blocks. According to the apparatus in patent document 2, two process systems are configured to separately perform write and read operations. The patent document 1 is Japanese Patent Unexamined Publication No. 2000-090551. The patent document 2 is Japanese Patent Unexamined Publication No. 11-296868.

However, these apparatuses having the plurality of process systems use one buffer memory and one interface to control reproduction/record operations, complicating control over the buffer memory.
According to the apparatus in patent document 1, the plurality of process systems use the common buffer memory and communicate with each other via one interface. This configuration is quite different from that of the conventional optical disk apparatus having a single process system. For this reason, a conventional processor cannot be used, necessitating the design of a new and special processor. For the use of the common buffer memory and interface in this case, the special data input/output control function needs to be installed.
According to the apparatus in patent document 2, a plurality of systems must cope with different linear speeds to access different addresses on a CLV-formatted disk. Accordingly, reproduction/record operations occur asynchronously between the two systems, further complicating setup conditions.

### SUMMARY OF THE INVENTION

It is therefore an object of the present invention to provide an optical disk reproduction/record apparatus which allows a plurality of systems to write or read information on an optical disk under simple control.

Namely, an inventive disk drive device is constructed for driving an optical disk while communicating with a host apparatus . The inventive devise comprises: a rotation drive section that rotatively driving one optical disk; a plurality of reproduction/record units that can write or read information on the optical disk in parallel with one another; a control section that controls the rotation drive section and controls the plurality of the reproduction/record units concurrently and independently with one another; and an input/output port that connects the plurality of the reproduction/record units to the host apparatus.
Each of the plurality of the reproduction/record units comprises: an optical pickup for irradiating an optical beam to write or read the information on the optical disk; an analog front-end circuit for treating the information as a form of an analog signal to be inputted to the optical pickup or outputted from the optical pickup; a digital processing section connected to the analog front-end circuit for processing the information as a form of digital data; an internal buffer provided for use in the processing of the digital data by the digital processing section; and a host interface for controlling communication between the digital processing section and the host apparatus through the input/output port.

Preferably in the inventive disk drive device, the input /output port comprises a single input/output port provided commonly for the respective host interfaces of the plurality of the reproduction/record units.

An inventive optical disk apparatus comprises a disk drive device for driving an optical disk while communicating data with a host apparatus and an interface bridge device for bridging between the disk drive device and the host apparatus.
The disk drive device comprises: a rotation drive section that rotatively driving one optical disk; a plurality of reproduction/record units that can write or read information on the optical disk in parallel with one another; a control section that controls the rotation drive section and controls the plurality of the reproduction/record units concurrently and independently with one another; and an input/output port that connects the plurality of the reproduction/record units to the host apparatus.
Each of the plurality of the reproduction/record units comprises: an optical pickup for irradiating an optical beam to write or read the information on the optical disk; an analog front-end circuit for treating the information as a form of an analog signal to be inputted to the optical pickup or outputted from the optical pickup; a digital processing section connected to the analog front-end circuit for processing the information as a digital form of data; an internal buffer provided for use in the processing of the data by the digital processing section; and a host interface for controlling communication between the digital processing section and the host apparatus through the input/output port.
The interface bridge device comprises: a drive interface connected to the input/output port of the disk drive device; a host interface connected to the host apparatus; a data input/output control section operative during the writing of the information on the optical disk for receiving data from the host apparatus through the host interface, then sequentially dividing the received data into segments each having a specified length, and transferring the segments of the data to the disk drive device through the drive interface so that the segments of the data can be distributed to the plurality of the reproduction/record units; and a buffer memory that buffers a predetermined number of the segments of the data sequentially supplied from the host apparatus.

Anther inventive optical disk apparatus comprises a disk drive device for driving an optical disk while communicating data with a host apparatus and an interface bridge device for bridging between the disk drive device and the host apparatus.
The disk drive device comprises: a rotation drive section that rotatively driving one optical disk; a plurality of reproduction/record units that can write or read information on the optical disk in parallel with one another; a control section that controls the rotation drive section and controls the plurality of the reproduction/record units concurrently and independently with one another; and an input/output port that connects the plurality of the reproduction/record units to the host apparatus.
Each of the plurality of the reproduction/record units comprises: an optical pickup for irradiating an optical beam to write or read the information on the optical disk; an analog front-end circuit for treating the information as a form of an analog signal to be inputted to the optical pickup or outputted from the optical pickup; a digital processing section connected to the analog front-end circuit for processing the information as a digital form of data; an internal buffer provided for use in the processing of the data by the digital processing section; and a host interface for controlling communication between the digital processing section and the host apparatus through the input/output port.
The interface bridge device comprises: a drive interface connected to the input/output port of the disk drive device; a host interface connected to the host apparatus; a data input/output control section operative during the writing of the information on the optical disk for receiving data from the host apparatus through the host interface, then sequentially dividing the received data into segments each having such a specified length that one segment of the data is equivalent to a data amount which can be treated as a unit by the reproduction/record unit for continuous writing of the information on the optical disk, and transferring the segments of the data to the disk drive device through the drive interface so that the segments of the data can be distributed to the plurality of the reproduction/record units; and a buffer memory that buffers a predetermined number of the segments of the data sequentially supplied from the host apparatus.

Preferably in the inventive optical disk apparatus, the interface bridge has the buffer memory which stores 2N - 1 number of the segments of the data, where N is a number of the reproduction/record units equipped in the disk drive device.

Preferably in the inventive optical disk apparatus, the interface bridge device has the data input/output control section which uses the buffer memory having top and end portions as a ring buffer such that the data input/output control section writes the data inputted from the host apparatus sequentially into the buffer memory from the top portion thereof, and after reaching the end portion of the buffer memory, then overwriting the data from the top portion thereof, the data input/output control section controlling the writing and reading of the data on the ring buffer such that a writing position of new data in the ring buffer is incremented to follow the oldest data which should be read out first from the ring buffer.

An inventive computer program is designed for use in a host apparatus which feeds information in the form a stream of data to a disk drive device for recording the information on an optical disk.
The disk drive device comprises: a rotation drive section that rotatively driving the optical disk; a plurality of reproduction/record units that can write or read information on the optical disk in parallel with one another; a control section that controls the rotation drive section and controls the plurality of the reproduction/record units concurrently and independently with one another; and an input/output port that connects the plurality of the reproduction/record units to the host apparatus.
Each of the plurality of the reproduction/record units comprises: an optical pickup for irradiating an optical beam to write or read the information on the optical disk; an analog front-end circuit for treating the information as a form of an analog signal to be inputted to the optical pickup or outputted from the optical pickup; a digital processing section connected to the analog front-end circuit for processing the information as a digital form of data; an internal buffer provided for use in the processing of the data by the digital processing section; and a host interface for controlling communication between the digital processing section and the host apparatus through the input/output port.
The computer program is executable by the host apparatus during the recording of the information for performing a method comprising the steps of: sequentially dividing the stream of the data into segments each having a specified length; and sequentially transferring the segments of the data to the disk drive device through the input/output port of the disk drive device so that the segments of the data can be distributed to the plurality of the reproduction/record units, thereby enabling parallel recording of the information on the optical disk by the plurality of the reproduction/record units.

According to the present invention, the internal buffer and the host interface are provided for each of a plurality of reproduction/record units that write data to or read data from a single optical disk. It becomes possible to independently provide each reproduction/record unit with control over data input/output, making the control simple and easy. This makes it possible to use construction of a single reproduction/record unit of the conventional optical disk drive as it is for the inventive disk drive, thereby contributing the reduction of drive construction costs.

According to the present invention, the host apparatus sequentially supplies data to the interface bridge device. The interface bridge device divides the data into segments each having an appropriate amount which each reproduction/record unit can continuously record on the optical disk. Each segment is transferred to the plurality of the reproduction/record units. The host apparatus just needs to sequentially transfer data from its beginning like recording data in an ordinary optical disk apparatus. It is possible to provide the same control and recording operations as those for ordinary optical disk drives. When each reproduction/record unit terminates recording of segments, the next segment of data is transmitted to the optical disk drive with a slight wait time. Each reproduction/record unit can efficiently record data without wasting time.

The present invention uses a single input/output (I/O) port to connect the host interfaces for the reproduction/record units to the host apparatus, making the connection simple and easy. The use of one I/O port prevents the reproduction/record units from collision by generating reproduction/record requests simultaneously, making the control simple and easy.

Even when the optical disk drive device having the plurality of reproduction/record units is directly connected to the host apparatus, the device driver program according to the present invention can provide control to write sequential data using the reproduction/record units.

### BRIEF DESCRIPTION OF THE DRAWINGS

Fig. 1 is a block diagram of the optical disk apparatus as an embodiment of the present invention.
Fig. 2 is a diagram showing a data recording process of the optical disk apparatus.
Fig. 3 is a diagram showing input/output process of a buffer memory in the optical disk apparatus.
Fig. 4 is a diagram showing input/output process of a buffer memory in the optical disk apparatus.
Fig. 5 is a flowchart showing operations of the optical disk apparatus.
Fig. 6 is a block diagram of the optical disk apparatus as another embodiment of the present invention.

### DETAILED DESCRIPTION OF THE INVENTION

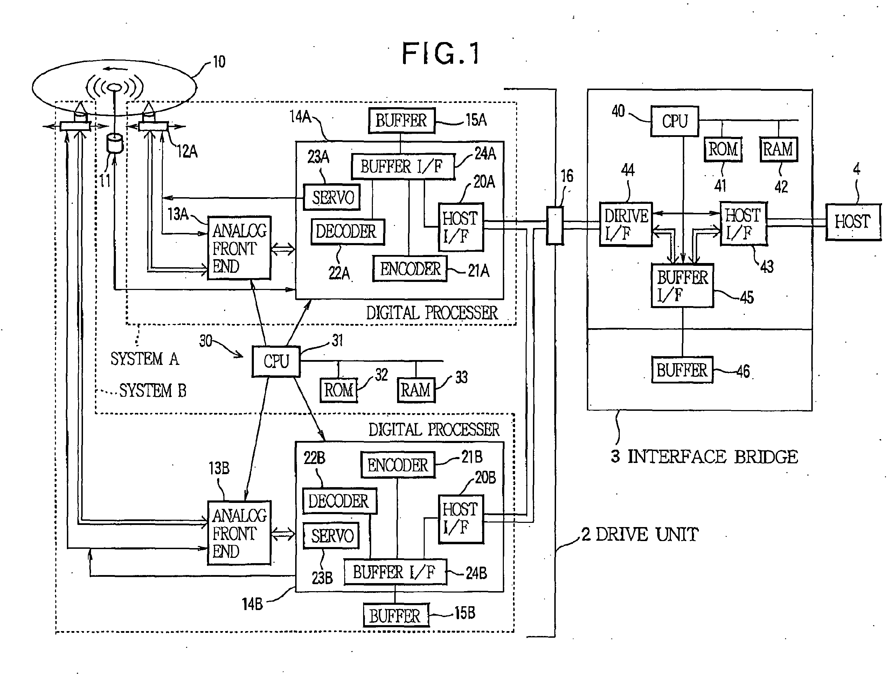

Fig. 1 is a block diagram showing the optical disk apparatus as an embodiment the present invention.
An optical disk apparatus 1 uses two optical pickup units 12 (12A and 12B) to write (record) data into and read (reproduce)data from one optical disk 10. The optical disk 10 is chucked by an optical disk chucking mechanism (not shown) comprising a turntable and the like, and is rotated by a spindle motor 11.

An optical pickup unit 12A is connected to an analog front-end circuit 13A and a signal processing unit 14A. An internal buffer memory 15A is connected to the signal processing unit 14A. The optical pickup unit 12A, the analog front-end circuit 13A, the signal processing unit 14A, and the buffer memory 15A constitute a system A of reproduction/record unit.

An optical pickup unit 12B is connected to an analog front-end circuit 13B and a signal processing unit 14B. Another internal buffer memory 15B is connected to the signal processing unit 14B. The optical pickup unit 12B, the analog front-end circuit 13B, the signal processing unit 14B, and the buffer memory 15B constitute a system B of reproduction/record unit.

The following describes systems A and B of the reproduction/record units. These reproduction/record units have the same configuration, and therefore omits suffix A and B for simplicity of explanation.
The optical pickup unit 12 has: a semiconductor laser; an optical sensor; an optical axial actuator; an optical head having an optical system and the like; a shaft to move the optical head; a feed motor; a radial actuator; a feed motor drive circuit and an actuator drive circuit to drive the feed motor and the actuator, and the like. The construction of the optical pickup unit 12 utilizes existing components and circuit, and therefore no further detailed description is necessary.

The analog front-end circuit 13 has an RF amplification circuit, a laser drive circuit, a focus error signal generation circuit, a tracking error signal generation circuit, and the like. The RF amplification circuit amplifies a read signal supplied from the optical sensor of the optical pickup unit 12. The focus error signal generation circuit generates a focus error signal based on a signal supplied from the optical sensor. The tracking error signal generation circuit generates a tracking error signal based on a signal supplied from the optical sensor. The read signal is amplified by the RF amplification circuit to provide RF signal of analog form. The RF signal is input to the signal processing unit 14 and is decoded into a baseband of digital data. The focus error signal generated by the focus error signal generation circuit and the tracking error signal generated by the tracking error signal generation circuit are input to a servo processing section 23 inside the signal processing unit 14. The servo processing section 23 generates an optical axial actuator drive signal based on the focus error signal and generates a radial actuator drive signal based on the tracking error signal.

The signal processing unit 14 comprises a DSP (digital signal processor). In addition to the above-mentioned decoder 22 and the servo processing section 23, the signal processing unit 14 also has: a host interface section 20; an encoder 21;; and a buffer interface section 24. The host interface section 20 interchanges signals with a host side (an interface bridge 3 and a host apparatus 4 such as a personal computer) disposed outside the disk drive device 2. The encoder 21 encodes data supplied from the host side into a mark string signal to be written to the optical disk 10 . The buffer interface section 24 controls data input and output to or from the buffer memory 15.

Generally, the buffer memory 15 has a storage capacity large enough to compensate for process time differences between the reproduction operation and the record operation. Generally, the buffer memory 15 has a storage capacity of approximately 2 to 8 MB in case of CD and DVD.

The reproduction/ record unit installed in the inventive disk drive device has the above-mentioned configuration, which can adopt an equivalent unit installed in a conventional optical disk drive having the only one optical pickup unit.

Both of the systems A and B of reproduction/record units installed in the inventive disk drive have the above-mentioned configuration. Host interfaces 20A and 20B for both systems are connected to the interface bridge 3 via a common I/O port 16. Otherwise, the host interfaces 20A and 20B may have separate external terminals (I/O ports). Namely, the disk drive unit may have a common I/O port or individual I/O ports.

There is provided a common control section 30 in the disk drive device 2 to control reproduction/record operations and the like for both systems of the reproduction/record units concurrently and independently of each other. The control section 30 comprises CPU 31, ROM 32, RAM 33, and the like. The control section 30 provides control to receive record data from the host side for writing of the record data into the disk 10 and to transmit reproduction data read from the disk 10 to the host side. Further, the control section 30 performs command processes in response to inquiry from the host side about model codes of the disk drive, disk types loaded into the disk drive, and the like.

The interface bridge 3 has: a CPU 40 as a control section; ROM 41 and RAM 42 as a memory; a host interface 43 to interchange data with host apparatuses such as personal computers; a drive interface 44 connected to the I/O port 16 to exchange data with the host interfaces 20A and 20B through the I/O port 16; a buffer memory 46; and a buffer interface 45 to manage input/output of the buffer memory 46 under the control by the control section 40.

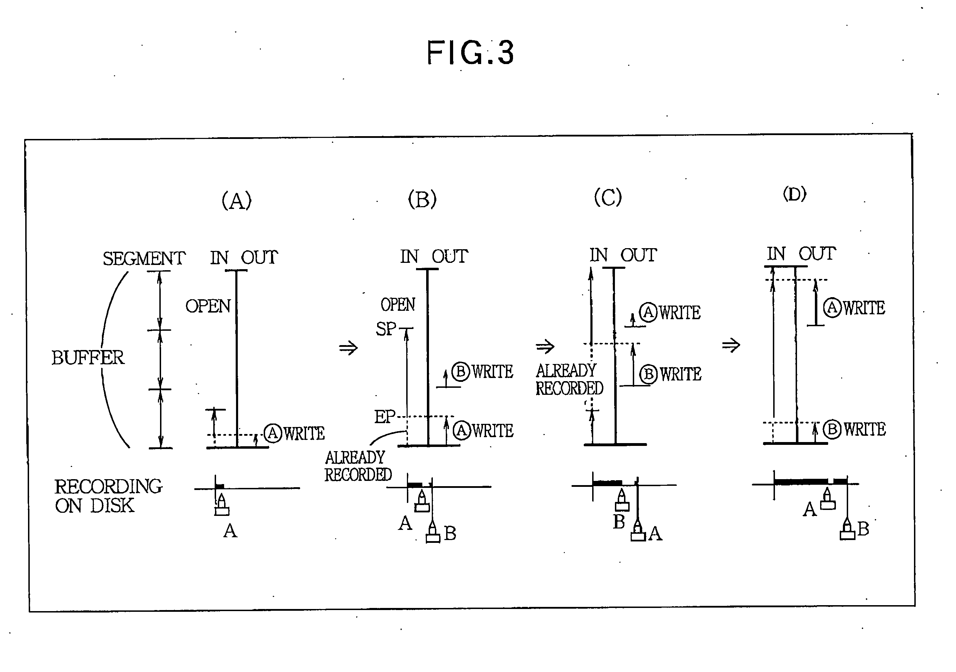

During the writing of data into the optical disk, the CPU 40 stores a large amount of data fed from the host apparatus 4 in the buffer memory 46. Then, the CPU 40 transfers the data through the drive inter face 44, and distributes the data to the systems A and B of the drive unit 2. During the reading of data from the optical disk 10, the CPU 40 stores the data fed separately from the systems A and B in the buffer memory 46 , and aligns the data when retrieving the data from the buffer memory 46 and sequentially outputs the aligned data to the host apparatus 4. The buffer memory 46 has a capacity of approximately 120 MB sufficient to perform the above described buffering operation. The control section (CPU 40) of the interface bridge 3 divides the buffer memory 46 into three segments for use. Writing and reading sequence of data to and from the buffer memory 46 will be described later with reference to Fig. 3.

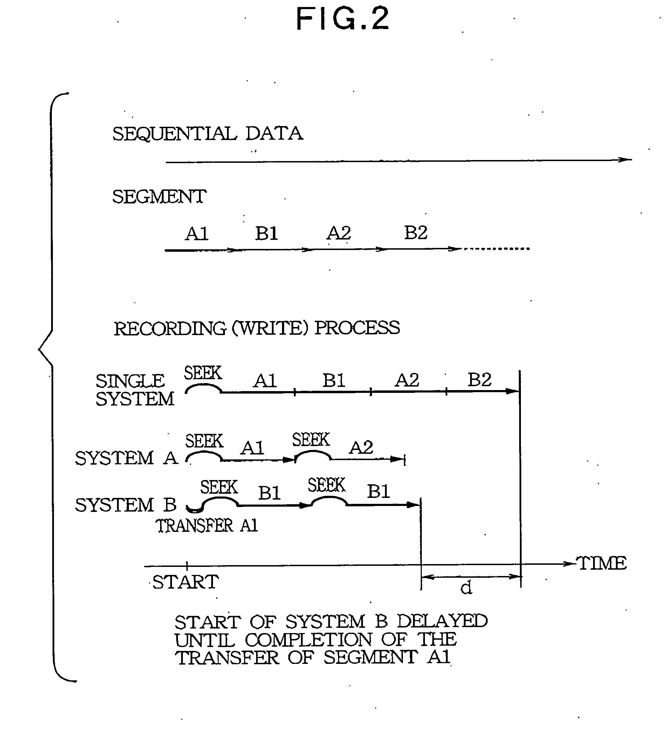

With reference to Fig. 2, the following describes processes of systems A and B in the optical disk apparatus having the above-mentioned configuration to write data onto the optical disk 10. First, a data string to be written (a stream of data) is divided into segments (A1, B1, A2, B2, ...) each comprising a specified number of bytes . According to the DVD specification, one segment comprises 36.8 MB (1150 ECC blocks). In case of writing data into the disk by 18X writing speed (11.5 MB/S), the data amount of each segment can be written approximately 3.2 seconds. When data for segment A1 is transferred from the host apparatus 4, the process allows the system A to seek a write start position. After this seek operation, the process starts transferring the data of segment A1. It is assumed that one ECC block comprises 16 sectors; one sector comprises 2 KB.

High-speed interfaces such as existing IDE and SCSI are used for communication between the host apparatus 4 and the interface bridge 3. Accordingly, writing data from the host apparatus 4 to the buffer memory 46 of the interface bridge 3 is much faster than reading data from the buffer memory 46 of the interface bridge 3 to the disk drive unit 2. When an IDE interface is used, for example, a data transfer rate is 100 MB/S or 66 MB/S that is much faster than a 16X DVD (8X x 2) reproduction/record rate of 23 MB/S.

When terminating transfer of segment A1 to the interface bridge 3, the host apparatus 4 then transfers segment B1 to the interface bridge 3. When the transfer of segment B1 terminates, the process initiates the system B to seek a write start position on the optical disk 10. After this seek operation, the process starts transferring segment B1 to system B of the disk drive unit 2.

The interface bridge 3 supplies data to each reproduction/record unit, for example, in units of 16 or 32 sectors which are smaller than the size of internal buffer 15 of each system.

As mentioned above, the data transfer time is much shorter than the time to write data onto the disk 10. Accordingly, alternately supplying data permits writing segment A1 by system A and writing segment B1 by system B concurrently as shown in Fig. 2.

When system A terminates writing of segment A1, the interface bridge 3 requests the host apparatus 4 to transfer segment A2 and performs the process similar to above. When system B terminates writing of segment B1, the interface bridge 3 requests the host apparatus 4 to transfer segment B2 and performs the process similar to above.

As mentioned above, sequential data is divided into a string of segments that are alternately distributed to systems A and B in succession except the occurrence of an error such as a seek error. Systems A and B concurrently write data. This makes it possible to shorten the write time for a time period represented by d in Fig. 2 compared to a single system (optical pickup) that sequentially writes data.

However, an error such as a seek error may delay the write start timing for one of the systems. If this delay occurs often, writing a succeeding segment by system B (or system A) may terminate earlier than writing a preceding segment by system A (or system B) . As a solution to this case, the buffer memory 46 has the storage area for three segments as mentioned above. The buffer memory 46 can receive data sequentially transferred from the host apparatus 4 and reverse the order of distributing data to systems A and B in the drive unit.

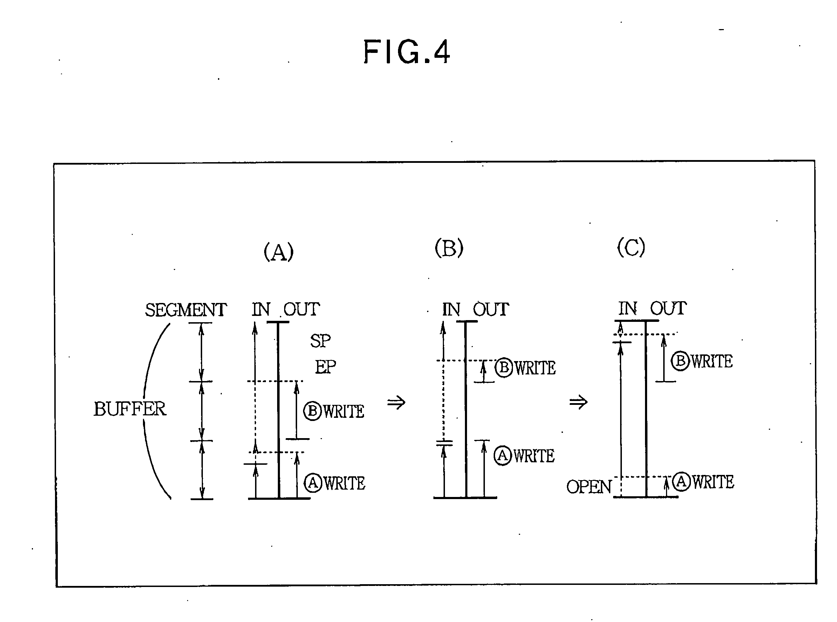

Fig. 3 is now referenced to describe data input/output to/from the buffer memory 46. Fig. 4 is referenced to describe a process to reverse the order of distributing data to systems A and B.

In Fig. 3, the buffer memory 46 is semiconductor memory (DRAM) having a storage capacity (approximately 120 MB) capable of storing 110.4 MB (36.8 MB x 3) of data. When, the CPU 40 of the interface bridge 3 is supplied with data sequentially (in a ring buffer fashion) from the host apparatus 4, the CPU 40 divides the storage area of the buffer 46 into three segments each comprising 36.8 MB . Then, the CPU 40 sequentially allocates data written in the segments to systems A and B of the drive unit.

As mentioned above, high-speed interfaces such as IDE and SCSI are used for communication between the host apparatus 4 and the interface bridge 3. Accordingly, writing data from the host apparatus 4 to the buffer memory 46 is much faster than reading data from the buffer memory 46 to the drive unit.
(A) The buffer memory 46 starts storing sequential data from the host apparatus 4. The control section (CPU 40) of the interface bridge 3 divides the data into segments. When data of the first segment A1 starts being stored in the buffer memory, the control section of the interface bridge 3 starts transferring this data to the system A.

(B) When the second segment B1 is then transferred to the buffer memory 46, the control section of the interface bridge 3 starts transferring this data to the system B. As described in conjunction with Fig. 2, a time delay is negligible between a start timing of storing the data of the segment A1 into the buffer memory form the host apparatus 4 and another start timing of storing the data of the segment B1 into the buffer memory form the host apparatus 4. Thus, the two systems A and B can substantially concurrently record data onto the disk 10.

(C) When systemA terminates recording of the first segment, the controller of the interface bridge 3 confirms that data for the third segment A2 is transferred to the buffer memory 46. The controller then starts transferring data for this segment to system A. In this state, system A is recording the third segment and system B is recording the second segment. The data transfer rate of the host apparatus 4 is higher than the recording rate. Consequently, writing to the buffer memory 46 completes one cycle at the beginning of the transfer. Thereafter, new data is overwritten to the first partition where segment A1 was written, and then is stored up to a recording end pointer of segment B1, i.e., up to the end of unrecorded data.

That is to say, the recording rate on the disk 10 restricts the data transfer to the drive unit 2. On the other hand, the data transfer rate of the interface 43 between the bridge 3 and the host 3 restricts the data transfer from the host apparatus 4. Since the interface's data transfer rate is much faster than the recording rate on the disk 10 as mentioned above, an input to the buffer memory 46 progresses faster than an output. For this reason, data transferred from the host apparatus 4 is sequentially overwritten to the recording end position of the earliest (first) segment. The recording end pointer for the earliest segment is used as the last point of the input.
(D) System B confirms the end of recording the second segment. It is then confirmed that the fourth segment B2 is stored in the first memory partition of the ring buffer. This data is transferred to system B. In this manner, both systems A and B can be used to record data without delay.

In most cases, the above-mentioned process writes data onto optical disks. However, a seek error may frequently occur to increase a delay in one of the systems. For example, a seek error is repeated (or accumulated) in either system A or B to increase a delay. Segment data cannot be distributed alternately to change the recording order. One of the systems records two segments in succession. The following describes a process to solve this situation with reference to Fig. 4.
(A) System A starts accessing segment A1 first. Due to a seek retry, however, system A terminates recording later than system B accessing segment B1.

Since system B terminates recording earlier and is therefore allowed to successively record the next area.
(C) When terminating recording, systemA should next record segment data to be transferred to the data partition where the currently recorded data was written. As mentioned above, however, the data transfer from the host apparatus 4 is much faster than the data recording on the disk 10. New data is sequentially overwritten to the area where the previous data is already recorded. When system A terminates recording of the previous segment, the next new segment data is almost transferred to this data partition. It is possible to continuously start recording segment data in this data partition.

As mentioned above, a plurality of systems are capable of efficient recording because the buffer memory 46 has the recording capacity large enough to store more segment data than the number of systems. When the number of systems is assumed to be N, the buffer memory 46 is configured to have the capacity capable of storing 2N-1 segments. Data is transferred in a ring buffer fashion so that the first position of the input pointer also functions as the end position of the output side. In this manner, the host apparatus 4 can sequentially transfer data and the drive unit can record data without delay.

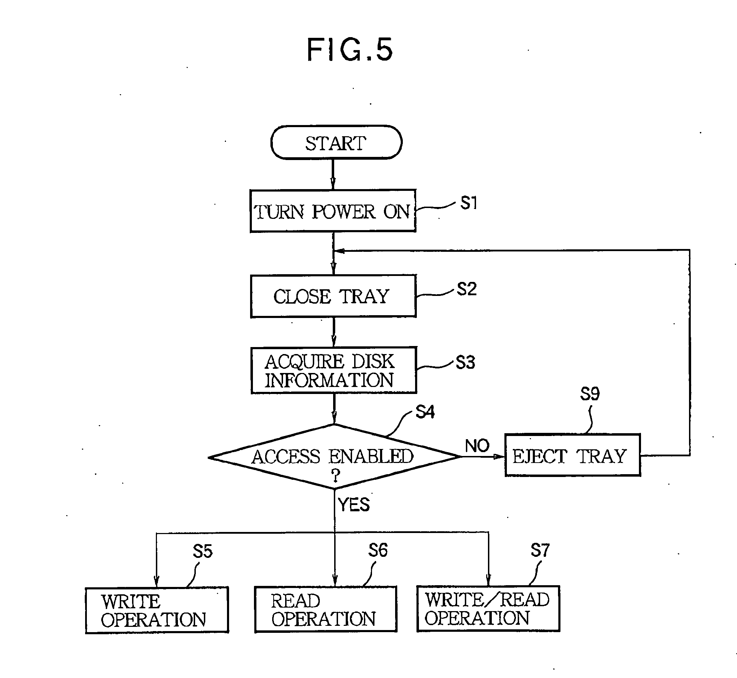

Referring now to a flowchart in Fig. 5, the following describes operations of the optical disk apparatus having the above-mentioned configuration. When the power is turned on, the drive unit 2 and the controller of the interface bridge 3 perform startup and initialization operations. The controller of the host apparatus 4 confirms the connected drive (s1).

The drive is confirmed according to the following procedure.
(1) The host apparatus 4 sends "Inquiry Command" to the interface bridge 3. The host apparatus 4 assumes the optical disk apparatus 1 to be one drive. Accordingly, the host apparatus 4 sends "Inquiry Command" for a single drive.

(2) In response to this, the interface bridge 3 also sends "Inquiry Command" to systems A and B of the drive unit 2.

(3) In response to this, systems A and B return identification information "YAMAHA DVDABC1" and "YAMAHA DVDABC2".

(4) Based on this response, the interface bridge 3 edits identification information "YAMAHA DVDABC" and returns the result to the host apparatus 4.

In response to Inquiry Command, Vender name and Model name are returned to the control side. The drive unit 2 according to the embodiment has a plurality of interfaces 20A and 20B corresponding to the single I/O port 16. In such drive, it is a good practice to suffix Model name with an individually identifiable character string (e.g., a number such as 1, 2, 3, and the like). This character string is removed from the identification information to be returned to the host apparatus so that the drive can be identified as a single drive.

It may be preferable to previously store Model name suffixed with an additional character string in a table, for example. The above-mentioned process may be performed when a received Model name matches the one stored in the table.

At step s2 in Fig. 5, a tray is closed in to the drive unit to load the disk 10. After the disk has been loaded, the process acquires disk information from the disk 10 (s3).

Until the tray is closed to complete the disk load, the host apparatus 4 and the drive unit 2 (one of systems A and B) interchange commands and status via the interface bridge 3. When a specified status code is returned, the interface bridge 3 and the host apparatus 4 acknowledge that the drive unit 2 has completed the disk load. Both systems need not acknowledge a disk. It just needs to issue an instruction to one of the systems.

At this time, the interface bridge 3 sends a command for acquiring the disk type to the drive unit 2. As a response, the drive unit 2 returns disk type information read from the disk 10 . The interface bridge 3 stores the disk type information in the RAM for control of recording and reading. This is because the reproduction/record control depends on disk types. For example, DVDs allow concurrent recording by two systems; CDs only allow recording by a single system due to interleaving.

In addition to this command, the host apparatus 4 may issue a command to acquire the disk type information.

In Fig. 5, if the disk is determined to be accessible after acquisition of the disk information (s4), the process performs a write operation (s5), a read operation (s6), or a reproduction/record operation (s7) according to a request from the host apparatus 4. If the disk is inaccessible (s4), the tray is ejected.

In this case, it may be preferable to distinguish such disks as DVDs capable of a reproduction/record operation using both systems A and B from such disks as CDs requiring only one system to perform a reproduction/record operation. According to the disk type, there may be a selection between the reproduction/record operation using both systems (this embodiment) and that using one of the systems (prior art).

Embodiment having no interface bridge
The optical disk apparatus according to the above-mentioned embodiment includes the interface bridge. Further, the drive unit can be used standalone without having the interface bridge. It is also possible to use a printer driver of the host apparatus 4 to manage the data transfer.

This embodiment will be described below.

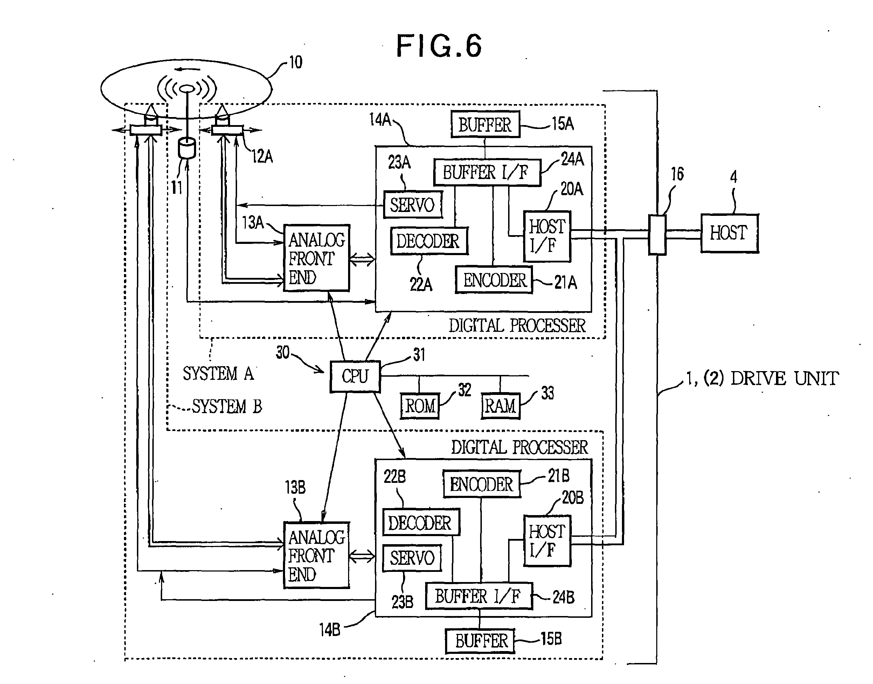

Fig. 6 is a block diagram of the optical disk apparatus according to the embodiment. According to the configuration of this embodiment, the host apparatus 4 is directly connected to the drive unit 2 of the optical disk apparatus in Fig. 1. The mutually corresponding parts in Figs. 6 and 1 are designated by the same reference numerals and a detailed description is omitted for simplicity.

The interface bridge 3 in Fig. 1 allows the host apparatus 4 to assume the drive unit 2 to be a single system and uses the internal buffer memory 46 to distribute data to systems A and B. On the other hand, the present embodiment allows the host apparatus 4 to assume systems A and B to be two drives. The device driver software is configured to control the two systems and record data on the single disk 10.

When the optical disk apparatus 1 is turned on, the device driver communicates with each of systems A and B to identify two drives. The device driver then references a subscript at the end of "YAMAHA DVDABC 1/2" assigned to the input Model name to identify that the two drives correspond to two systems of units in one optical disk apparatus 1 (s1 in Fig. 5).

The host apparatus 4 can send a GetFeature command to the drive to determine its capability. To use this function, a "Multi-Unit" feature needs to be provided between the host apparatus and the drive so that the drive returns "Multi-Unit" in response to the GetFeature command.

The host apparatus issues the GetFeature command to the single port 16 of the drive unit 2. According to the number of "Multi-Unit" responses returned, the host apparatus can determine how many units constitute one drive.

The above-mentioned algorithm is used to acquire information when the system having a plurality of interfaces is connected to an ordinary personal computer. In addition, the device driver needs to have the function of allowing various application programs to assume the interfaces (systems) to be a single apparatus having the same drive name. This function is also provided for the device driver installed in the host apparatus 4 according to the embodiment.

The device driver divides sequential data stored in the host apparatus 4 in units of segments and provides control to output each segment to system A or B (same as the techniques in Figs. 3 and 4) . This enables systems A and B to concurrently perform record processes.

Also' in this case, it may be preferable to distinguish such disks as DVDs capable of a reproduction/record operation using multiple units from such disks as CDs requiring only one unit to perform a reproduction/record operation. Control just needs to be provided selectively.

In the above-mentioned embodiment, systems A and B may write data at different positions on the single disk 10. In this case, both systems cause different positions (distances) for the corresponding optical heads along the radial direction, causing different linear speeds along the track direction. Both systems require different times to record one segment. This can be handled as a tolerance range. Assuming one segment to be 36.8 MB, On the innermost periphery that causes the largest difference, the A1 segment starts at the radius of 24.0 mm; the next B1 segment starts at the radius of 24.46 mm. The tolerance is 0.46 mm. Since a speed is proportional to a radius, the tolerance is 0.46/24 = 0.0192, i.e., 1.9% and causes no problem in reproduction/record operations.

There has been described writing (recording) on the DVD as an example of reproduction/record operations in systems A and B (multiple units) according to the embodiment. Disk media are not limited to DVDs. However, data formats must be capable of being divided into a plurality of units for writing. The number of reproduction/record units is not limited to two, i.e., A and B, but may be three or more.

The embodiment can be also applied to not only writing, but also reading. In this case, the interface bridge or the device driver is supplied with data strings incontiguously from a plurality of systems, aligns the data strings into sequential data, and outputs it to the host apparatus (or an application program).

## Claims

1. A disk drive device for driving an optical disk while communicating with a host apparatus, comprising:
a rotation drive section that rotatively driving one optical disk;
a plurality of reproduction/record units that can write or read information on the optical disk in parallel with one another;
a control section that controls the rotation drive section and controls the plurality of the reproduction/record units concurrently and independently with one another; and
an input/output port that connects the plurality of the reproduction/record units to the host apparatus,
wherein each of the plurality of the reproduction/record units comprises:
an optical pickup for irradiating an optical beam to write or read the information on the optical disk;
an analog front-end circuit for treating the information as a form of an analog signal to be inputted to the optical pickup or outputted from the optical pickup;
a digital processing section connected to the analog front-end circuit for processing the information as a form of digital data;
an internal buffer provided for use in the processing of the digital data by the digital processing section; and
a host interface for controlling communication between the digital processing section and the host apparatus through the input/output port.

2. The disk drive device according to claim 1, wherein the input /output port comprises a single input/output port provided commonly for the respective host interfaces of the plurality of the reproduction/record units.

3. An optical disk apparatus comprising a disk drive device for driving an optical disk while communicating data with a host apparatus and an interface bridge device for bridging between the disk drive device and the host apparatus, wherein
the disk drive device comprises:
a rotation drive section that rotatively driving one optical disk;
a plurality of reproduction/record units that can write or read information on the optical disk in parallel with one another;
a control section that controls the rotation drive section and controls the plurality of the reproduction/record units concurrently and independently with one another; and
an input/output port that connects the plurality of the reproduction/record units to the host apparatus, wherein
each of the plurality of the reproduction/record units comprises:
an optical pickup for irradiating an optical beam to write or read the information on the optical disk;
an analog front-end circuit for treating the information as a form of an analog signal to be inputted to the optical pickup or outputted from the optical pickup;
a digital processing section connected to the analog front-end circuit for processing the information as a digital form of data;
an internal buffer provided for use in the processing of the data by the digital processing section; and
a host interface for controlling communication between the digital processing section and the host apparatus through the input/output port, and wherein
the interface bridge device comprises:
a drive interface connected to the input/output port of the disk drive device;
a host interface connected to the host apparatus;
a data input/output control section operative during the writing of the information on the optical disk for receiving data from the host apparatus through the host interface, then sequentially dividing the received data into segments each having a specified length, and transferring the segments of the data to the disk drive device through the drive interface so that the segments of the data can be distributed to the plurality of the reproduction/record units; and
a buffer memory that buffers a predetermined number of the segments of the data sequentially supplied from the host apparatus.

4. An optical disk apparatus comprising a disk drive device for driving an optical disk while communicating data with a host apparatus and an interface bridge device for bridging between the disk drive device and the host apparatus, wherein
the disk drive device comprises:
a rotation drive section that rotatively driving one optical disk;
a plurality of reproduction/record units that can write or read information on the optical disk in parallel with one another;
a control section that controls the rotation drive section and controls the plurality of the reproduction/record units concurrently and independently with one another; and
an input/output port that connects the plurality of the reproduction/record units to the host apparatus, wherein
each of the plurality of the reproduction/record units comprises:
an optical pickup for irradiating an optical beam to write or read the information on the optical disk;
an analog front-end circuit for treating the information as a form of an analog signal to be inputted to the optical pickup or outputted from the optical pickup;
a digital processing section connected to the analog front-end circuit for processing the information as a digital form of data;
an internal buffer provided for use in the processing of the data by the digital processing section; and
a host interface for controlling communication between the digital processing section and the host apparatus through the input/output port, and wherein
the interface bridge device comprises:
a drive interface connected to the input/output port of the disk drive device;
a host interface connected to the host apparatus;
a data input/output control section operative during the writing of the information on the optical disk for receiving data from the host apparatus through the host interface, then sequentially dividing the received data into segments each having such a specified length that one segment of the data is equivalent to a data amount which can be treated as a unit by the reproduction/record unit for continuous writing of the information on the optical disk, and transferring the segments of the data to the disk drive device through the drive interface so that the segments of the data can be distributed to the plurality of the reproduction/record units; and
a buffer memory that buffers a predetermined number of the segments of the data sequentially supplied from the host apparatus.

5. The optical disk apparatus according to claim 3 or 4, wherein the interface bridge has the buffer memory which stores 2N - 1 number of the segments of the data, where N is a number of the reproduction/record units equipped in the disk drive device.

6. The optical disk apparatus according to claim 3, 4, or 5, wherein the interface bridge device has the data input/output control section which uses the buffer memory having top and end portions as a ring buffer such that the data input/output control section writes the data inputted from the host apparatus sequentially into the buffer memory from the top portion thereof, and after reaching the end portion of the buffer memory, then overwriting the data from the top portion thereof, the data input/output control section controlling the writing and reading of the data on the ring buffer such that a writing position of new data in the ring buffer is incremented to follow the oldest data which should be read out first from the ring buffer.

7. A computer program for use in a host apparatus which feeds information in the form a stream of data to a disk drive device for recording the information on an optical disk, wherein the disk drive device comprises: a rotation drive section that rotatively driving the optical disk; a plurality of reproduction/record units that can write or read information on the optical disk in parallel with one another; a control section that controls the rotation drive section and controls the plurality of the reproduction/record units concurrently and independently with one another; and an input/output port that connects the plurality of the reproduction/record units to the host apparatus, each of the plurality of the reproduction/record units comprising: an optical pickup for irradiating an optical beam to write or read the information on the optical disk; an analog front-end circuit for treating the information as a form of an analog signal to be inputted to the optical pickup or outputted from the optical pickup; a digital processing section connected to the analog front-end circuit for processing the information as a digital form of data; an internal buffer provided for use in the processing of the data by the digital processing section; and a host interface for controlling communication between the digital processing section and the host apparatus through the input/output port, the computer program being executable by the host apparatus during the recording of the information for performing a method comprising the steps of:
sequentially dividing the stream of the data into segments each having a specified length; and
sequentially transferring the segments of the data to the disk drive device through the input/output port of the disk drive device so that the segments of the data can be distributed to the plurality of the reproduction/record units,thereby enabling parallel recording of the information on the optical disk by the plurality of the reproduction/record units.

8. A method of operating a disk drive device for driving an optical disk while communicating with a host apparatus, the disk drive device comprising: a rotation drive section that rotatively driving one optical disk; a plurality of reproduction/record units that can record or reproduce information on the optical disk in parallel with one another; and an input/output port that connects the plurality of the reproduction/record units to the host apparatus, each of the plurality of the reproduction/record units comprising: an optical pickup for irradiating an optical beam to write or read the information on the optical disk; an analog front-end circuit for treating the information as a form of an analog signal to be inputted to the optical pickup or outputted from the optical pickup; a digital processing section connected to the analog front-end circuit for processing the information as a digital form of data; and an internal buffer provided for use in the processing of the data by the digital processing section, the method comprising the steps of:
controlling the rotation drive section and also controlling the plurality of the reproduction/record units concurrently and independently with one another for recording or reproducing of the information on the optical disk;
in case of the recording of the information, receiving the information to be recorded from the host apparatus in the form of a stream of data through the input/output port, and distributing the received data to the plurality of the reproduction/record units; and
in case of the reproducing of the information, collecting the data reproduced by the plurality of the reproduction/record units, and transmitting the collected data to the host apparatus through the input/output port so that the host apparatus can receive the reproduced information in the form of the collected data.

9. The method according to claim 8, wherein the step of receiving receives the information to be recorded from the host apparatus through the input/output port composed of a single input/output port provided commonly for the plurality of the reproduction/record units, and the step of transmitting transmits the collected data to the host apparatus through the single input/output port.

10. A method of bridging a host apparatus and a disk drive device for driving an optical disk while communicating data with the host apparatus, the disk drive device comprising: a rotation drive section that rotatively driving one optical disk; a plurality of reproduction/record units that can write or read information on the optical disk in parallel with one another; a control section that controls the rotation drive section and controls the plurality of the reproduction/record units concurrently and independently with one another; and an input/output port that connects the plurality of the reproduction/record units to the host apparatus, each of the plurality of the reproduction/record units comprising: an optical pickup for irradiating an optical beam to write or read the information on the optical disk; an analog front-end circuit for treating the information as a form of an analog signal to be inputted to the optical pickup or outputted from the optical pickup; a digital processing section connected to the analog front-end circuit for processing the information as a digital form of data; an internal buffer provided for use in the processing of the data by the digital processing section; and a host interface for controlling communication between the digital processing section and the host apparatus through the input/output port, the method comprising the steps of:
connecting the input/output port of the disk drive device to the host apparatus:
in case of the writing of the information on the optical disk, receiving the information to be recorded from the host apparatus in the form of a stream of data;
sequentially dividing the received stream of the data into segments each having a specified length;
transferring the segments of the data to the disk drive device through the input/output port so that the segments of the data can be distributed to the plurality of the reproduction/record units; and
buffering a predetermined number of the segments of the data before feeding the segments to the disk drive device for enabling parallel operation of the plurality of the reproduction/record units.

11. A method of bridging a host apparatus and a disk drive device for driving an optical disk while communicating data with the host apparatus, the disk drive device comprising: a rotation drive section that rotatively driving one optical disk; a plurality of reproduction/record units that can write or read information on the optical disk in parallel with one another; a control section that controls the rotation drive section and controls the plurality of the reproduction/record units concurrently and independently with one another; and an input/output port that connects the plurality of the reproduction/record units to the host apparatus, each of the plurality of the reproduction/record units comprising: an optical pickup for irradiating an optical beam to write or read the information on the optical disk; an analog front-end circuit for treating the information as a form of an analog signal to be inputted to the optical pickup or outputted from the optical pickup; a digital processing section connected to the analog front-end circuit for processing the information as a digital form of data; an internal buffer provided for use in the processing of the data by the digital processing section; and a host interface for controlling communication between the digital processing section and the host apparatus through the input/output port, the method comprising the steps of:
connecting the input/output port of the disk drive device to the host apparatus;
in case of writing of the information on the optical disk, receiving the information to be recorded from the host apparatus in the form of a stream of data;
sequentially dividing the received stream of the data into segments each having such a specified length that one segment of the data is equivalent to a data amount which can be treated as a unit by the reproduction/record unit for continuous writing of the information on the optical disk;
transferring the segments of the data to the disk drive device through the input/output port so that the segments of the data can be distributed to the plurality of the reproduction/record units; and
buffering a predetermined number of the segments of the data before feeding the segments to the disk drive device for enabling parallel operation of the plurality of the reproduction/record units.

12. The method according to claim 10 or 11, wherein the step of buffering buffers 2N - 1 number of the segments of the data, where N is a number of the reproduction/record units equipped in the disk drive device.

13. The method according to claim 10, 11, or 12, wherein the step of buffering uses a buffer memory having top and end portions such that the data inputted from the host apparatus are written sequentially into the buffer memory from the top portion thereof , and after reaching the end portion of the buffer memory, then the data is overwritten from the top portion thereof, the buffer memory being operated as a ring buffer such that a writing position of new data in the ring buffer is incremented to follow the oldest data which should be read out first from the ring buffer.
